# EUROPEAN PATENT APPLICATION

(11) **EP 4 579 213 A1**
(43) Date of publication of application: **02.07.2025**
(21) Application number: 23220300.0
(22) Date of filing: 27.12.2023
(51) Int. Cl.: G01N 15/12, B01L 3/02, B01L 9/00, G01N 35/10

(54) **PARTICLE SEPARATOR FOR A LABORATORY AUTOMATION DEVICE**

(71) Applicant: Tecan Trading AG, 8708 Männedorf (CH)
(72) Inventor: PIEHLER, Andreas, 7324 Vilters (CH); FREI, Luca, 8634 Hombrechtikon (CH); Ott, Philipp, 8496 Steg (CH)
(74) Representative: Sykora & König Patentanwälte PartG mbB

(57) **Abstract**

A particle separator (20) for a laboratory automation device (10) comprises a first tapered receptacle (40a) and a second tapered receptacle (40b); a first chamber (58a) below the first tapered receptacle (40a) and a second chamber (58b) below the second tapered receptacle (40b); a connection channel (60) interconnecting the first chamber (58a) and the second chamber (58b); and an outlet channel (54) connected to the second chamber (58a).

## Description

### FIELD OF THE INVENTION

The invention relates to a particle separator for a laboratory automation device, particle separator set for a laboratory automation device and a laboratory automation device.

### BACKGROUND OF THE INVENTION

Laboratory automation devices are used for automating tasks of a laboratory assistant, which, for example, tests a patient for specific diseases. Usually, a sample of the patient's blood, urine, stool, etc. is taken and analyzed by means of a biochemical procedure. Such a procedure consists in various operations like adding substances, incubating, separating, etc. and a measurement process which quantitatively or qualitatively measures the amount or presence of a substance indicating the specific disease. Some of these procedures comprise the step of seeding cells into wells of microplates.

Usually, cell sorters use light scattering or cameras to detect single cells. These systems are expensive, bulky, not modular and hard to integrate into complex liquid handling operations. Therefore, cell separation usually needs a lot of manual interceptions even when integrated into an assay procedure that is partially performed by a laboratory automation device.

### DESCRIPTION OF THE INVENTION

It is an object of the invention to simplify the separation of cells or more generally small particles during an automated assay procedure. It is a further object of the invention to enable a laboratory automation device adapted for handling pipette tips to dispense single particles, such as cells or cell clusters, into wells of a microplate.

These objectives are achieved by the subject-matter of the independent claims. Further exemplary embodiments are evident from the dependent claims and the following description.

An aspect of the invention relates to a particle separator for a laboratory automation device. The particle separator may be a single, one-piece member, which can be transported by the laboratory automation device with its pipetting arm. In particular, the particle separator may be picked up with pipette tips, in particular disposable pipette tips from a tray, and may be moved around with the pipetting arm. The liquid and/or suspension inside the particle separator can be pumped between chambers of the particle separator with pressures generated in the pipette tips. A laboratory automation device may be any device having components for performing these tasks, i.e., a pressure generator, such as a pump and a pipetting arm.

According to an embodiment, the particle separator comprises: a first tapered receptacle and a second tapered receptacle, a first chamber below the first receptacle and a second chamber below the second receptacle, a connection channel interconnecting the first chamber and the second chamber and an outlet channel connected to the second chamber.

Each of the first receptacle and the second receptacle are designed for receiving the lower end of a pipetting tip. In particular, they are both tapered, i.e., they have an opening decreasing in diameter in a direction, in which the respective pipette tip is inserted into the respective receptacle. For example, each of the receptacles may have a conical inner surface. When the respective pipette tip is inserted into the receptacle, it stays there by friction fit and the particle separator can be transported around with the pipetting arm of the laboratory automation device.

The chambers of the particle separator may be cavities inside the particle separator. The chambers may be solely connected via the receptacles and the channels with an exterior of the particle separator. The chambers may be filled with liquid and/or a suspension of liquid and particles via the pipette tips.

The connection channel, which may be seen as a microchannel and/or Coulter channel, interconnects the two chambers. By applying different pressures to the pipette tips, liquid may be pumped through the connection channel from the one chamber into the other. When a particle, such as a cell or bead, enters the connection channel, this may be detected via the laboratory automation device. The detected particle may be transported into the second chamber and dispensed from there via the outlet channel by applying suitable pressures to the pipette tips.

The presence of a particle in the connection channel may be detected by measuring an impedance and/or resistance change of the liquid inside the channel, when a particle enters the connection channel. The connection channel may have a diameter to be close to the size of the particles to increase this impedance and/or resistance change. On the other hand, the connecting channel may have a larger cross-section to minimize a resistance of the liquid in the channel to reduce the signal-to-noise ratio and hence the smallest particle possibly detected. For example, the connection channel may have a diameter of less than 500 µm. For cells, the diameter may be as low as 10 µm.

The length of the connection channel may be at least one, two or three times its diameter, to reduce the chance that two particles enter the connection channel in one time.

The outlet channel may have a larger diameter as the connection channel, for example, between 500 µm and 1000 µm.

With the particle separator, the general problem of interfacing microfluidic chips with pipetting arms without clamping the chip to a worktable of the laboratory automation device is solved. This enables a flexible chip movement inside the laboratory automation device. The particle separator does not require mounting on the worktable and can be picked up similar to disposable pipette tips allowing flexible movement during operation. The particle separator may be a consumable, which is put on top of the pipette tips after aspirating the suspension with the particles. After use, the particle separator may be disposed together with the pipette tips.

According to an embodiment, the connection channel enters into the first chamber above a bottom of the first chamber. Analogously, the connection channel may enter into the second chamber above a bottom of the second chamber. This may mean that a lowest point of the respective input of the connection channel is higher than a point of the bottom wall of the first and/or second chamber below the connection channel. There may be a section of vertical wall between the connection channel and the bottom and/or bottom wall of the respective chamber.

A vertical distance between the input of the connection channel and/or the lowest point of the input to the bottom may be 1 to 2 average particle diameters and/or 1 to 2 diameters of the connection channel.

According to an embodiment, a bottom wall of the first chamber is angled, such that the bottom of the first chamber runs downwards towards the connection channel. The first chamber may be lower at a side of the first chamber (compared to the other side), where the connection channel enters the first chamber. In general, the angle of the bottom wall and/or a line of the bottom wall towards the connection channel with respect to a horizontal line is more than 2° and/or less than 15°. There may be a significant difference in the liquid-flowrate at the center of the connection channel compared to the vicinity of the channel wall (which can be derived from the Hagen-Poisson law). There may be analogous flow profiles in the first chamber. However, sinking particles may leave an area with higher flowrate and may sink to the bottom of the first chamber. An angled bottom of the first chamber has the advantage that gravity pulls particles closer to the connection channel and brings them back into the liquid stream.

According to an embodiment, a bottom wall of the second chamber runs downwards between the connection channel and the outlet channel. This may help the particle to run down to the outlet channel. The second chamber may be lower at the outlet channel compared to a side, where the connection channel enters the second chamber. In general, the angle of the bottom wall and/or a line of the bottom wall towards the outlet channel with respect to a horizontal line is more than 5° and/or less than 25°.

According to an embodiment, the first receptacle and the second receptacle have the same inner shape and optionally outer shape. Each of the receptacles of the particle separator are designed, such that a lower section of a pipette tip fits into the receptacle and stays there by friction fit, after being pressed into the receptacle. The inner shape of each receptacle, in particular of an inner surface of the receptacle, may be equal to an outer shape of the lower section of a pipette tip, in particular an outer surface of the lower section of the pipette tip.

In general, the lower section of the pipette tip becomes smaller towards an outer end and/or the inner shape and/or surface of the receptacle becomes smaller towards the respective chamber, i.e., the receptacle is tapered. As an example, each of the first receptacle and the second receptacle may have a conical inner shape and/or conical inner surface.

According to an embodiment, each of the first receptacle and the second receptacle have a guiding surface and an adjoining sealing surface. The sealing surface may be the inner surface of the receptacle at which the pipette tip sticks with friction fit. Both the guiding surface and the sealing surface may be tapered and/or may have decreasing diameter towards the respective chamber. The guiding surface may have a larger opening angle as the sealing surface. The guiding surface may have an opening angle of more than 45° and/or the sealing surface may have an opening angle of less than 45°. The sealing surface may have an angle between 4° and 8° with respect to an axis of the respective receptacle. The opening angle of the conical surface with respect to the axis may be between 4° and 8°.

According to an embodiment, an upper rim of the first receptacle and an upper rim of the second receptacle are at the same horizontal level. This may help to insert two pipette tips at the same time.

According to an embodiment, the outlet channel is provided in a pipette end of the particle separator. The particle separator may have a main body, in which the first chamber and the second chamber are situated. The pipette end may protrude from the main body, in particular in a vertical direction. The pipette end may be formed like the end of a disposable pipette tip and/or may be used to dispense the separated particle and/or liquid in the second chamber into a container, such as a well. At least a section of the pipette end may be conical and/or the outlet channel may be provided in the conical tip.

According to an embodiment, a collar surrounding the outlet channel is provided below the second chamber. The collar is adapted and/or designed to be seated in a pipette tip tray, in particular in a tray receptacle of the pipette tip tray. The collar may be shaped like an upper section of a disposable pipette tip. The collar may have a cylindrical outer surface and a lower rim to be seated on a seating surface of the tray receptacle. Such a collar makes it possible to place the particle separator in the same trays as the pipette tips. Particle separators and pipette tips may be placed in two separate trays.

When there is a further collar below the first chamber, the further collar may be seen as a first collar and the collar below the second chamber may be seen as a second collar.

According to an embodiment, a further collar is provided below the first chamber. This collar may have the same design and/or outer shape as the collar below the second chamber. The further collar may have a cylindrical outer surface and a lower rim to be seated on a seating surface of the tray receptacle. The distance of the first collar and the second collar may be equal to a distance of neighbouring tray receptacle in a pipette tip tray. The distance of the first collar and the second collar is preferably 9 mm.

According to an embodiment, the collar and the further collar have the same outer shape. The diameters of the cylindrical outer surfaces may be the same. The collar and the further collar may have a lower rim at the same horizontal level, which both can be seated on seating surfaces of tray receptacles.

According to an embodiment, the particle separator is made of an electrical insulating material. As already mentioned, the presence of a particle in the connection channel may be determined based on measurements, from which an impedance and/or resistance and/or capacitance of the liquid inside the connection channel can be derived. This resistance and/or impedance changes, when a particle enters or leaves the connection channel. The resistance and/or impedance may be measured by applying a voltage to the first chamber and the second chamber. The corresponding conduction path is then through the first chamber, the connection channel and the second chamber. An electrically insulating particle separator has the advantage that solely the connection channel and not the material around the connection channel contributes to the conduction path. This may reduce the signal-to-noise ratio for the resistance and/or impedance changes.

According to an embodiment, the particle separator is made from plastics material by injection moulding. For example, the particle separator may be made of two mirror symmetric halves, which are attached after moulding. The particle separator may be designed as a consumable and/or disposable item. It may be mass-produced from polypropylene, for example by injection moulding. It may be a single use consumable and thus sterile and save from cross-contamination.

According to an embodiment, the particle separator is made from solely one material, such as plastics material and/or polypropylene. No further parts, in particular made from electrically conducting material, are integrated into the particle separator. Neither electronics nor electrodes are embedded in the particle separator.

A further aspect of the invention relates to a particle separator set for a laboratory automation device. The particle separator set may be seen as the particle separator and further disposable equipment to be used together with the particle separator. This equipment may include pipette tips and pipette tip trays.

According to an embodiment, the particle separator set comprises one or more particle separators such as described herein and one or more pairs of pipette tips having tips fitting into the first receptacle and the second receptacle of the particle separators. The particle separators may be equally designed and/or the pipette tips may be equally designed.

According to an embodiment, the particle separator set further comprises a plurality of particle separators such as described herein, a plurality of disposable pipette tips and a pipette tip tray for receiving the pipette tips and/or the particle separators. The particle separators and the pipette tip may be seated in one or two pipette tip trays. Such trays equipped with particle separators and for example two pipette tips per particle separator may be sold as equipment for particle separation.

According to an embodiment, the pipette tip tray comprises tray receptacles, which are regularly arranged and each of which has a seating and/or a vertical seating surface for a collar of one of the pipette tips. Such a pipette tip collar may have a cylindrical outer surface and a lower rim to be seated on the vertical seating surface. Each particle separator has at least two collars fitting into the seatings of at least two neighbouring tray receptacles. As already mentioned, these collars may be designed like the collars of the pipette tips and may have a distance, such that they fit into neighbouring tray receptacles.

A further aspect of the invention relates to a method for separating particles with a laboratory automation device. The method may be performed automatically by the laboratory automation device. It has to be understood that features of the method as described in the above and in the following may be features of the laboratory automation device described herein, and vice versa.

According to an embodiment, the method comprises: mounting a first pipette tip and a second pipette tip to a pipetting arm of the laboratory automation device. The first pipette tip and the second pipette tip may be taken from a tray, for example a pipette tip tray such as described above with respect to the particle separator set.

According to an embodiment, the method comprises: mounting a particle separator to a pipetting arm of the laboratory automation device, wherein a first pipette tip and a second pipette tip are connected to the pipetting arm, wherein the particle separator is mounted by inserting the first pipette tip into a first receptacle and the second pipette tip into a second receptacle of the particle separator. Both the pipette tips stay in the receptacles by friction fit and the particle separator may be moved around in the laboratory automation device with the pipetting arm. The particle separator may be taken from a tray, for example a pipette tip tray such as described above with respect to the particle separator set.

The laboratory automation device has a pipetting arm, which is adapted for mounting at least two pipette tips. Furthermore, the laboratory automation device and in particular the pipetting arm may be adapted for setting a distance between the pipette tips to a distance between the receptacles of the particle separator.

According to an embodiment, the method comprises: generating a pressure difference between a first chamber and a second chamber of the particle separator, such that a suspension inside the first chamber and the second chamber is moved through a connection channel interconnecting the first chamber and the second chamber, wherein the first chamber is interconnected with the first receptacle and the second chamber is interconnected with the second receptacle and wherein different pressures are applied to the first chamber and the second chamber via the first pipette tip and the second pipette tip, which are connected to at least one pressure generator of the laboratory automation device. There may be a separate pressure generator, such as a syringe pump, per pipette tip. Alternatively, the pressure in more than one pipette tip is generated with one pressure generator and valves.

The laboratory automation device is adapted for generating individual pressures inside the pipette tips. There may be valves, which reduce a pressure from the pressure generator, such as a pump, to pressures to be applied to the pipette tips. The pressure difference between the pipette tips may be set, such that a pressure difference is generated between the first chamber and the second chamber. A flow of the suspension inside the connection channel is generated in this way.

The suspension contains particles, at least in the first chamber. Due to the flow, it may occur that one of the particles enters the connection channel. The particles in the suspension may be one of cells, organoids and/or beads, and in particular, the particle may be one of a cell, an organoid and a bead. When the particle enters into the connection channel, this results in a different and/or changing impedance of the connection channel. Such a change may be measured by the laboratory automation device, for example based on the principle of a Coulter counter.

According to an embodiment, the method comprises: determining an impedance signal indicative of an impedance of the suspension inside the connection channel, with a measurement device of the laboratory automation device; and detecting a particle in the suspension passing the connection channel by evaluating the impedance signal.

In general, the impedance may refer to resistance and/or capacitance of the suspension inside the connection channel. The measurement device may apply a voltage to a conduction path through the particle separator. This conduction path may comprise the first chamber, the connection channel and the second chamber. The impedance signal may be the voltage across the conduction path over time. A changing current through the conduction path, and/or when the voltage signal is an AC signal, a changing frequency amplitude and/or phase are indicative of a changed impedance of the conduction path.

When a particle enters or leaves the connection channel, this results in a change of the impedance signal. It may be that the impedance signal lowers or rises when the particle is inside the connection channel. This results in a peak of the impedance signal compared to an average impedance. Such peaks may be detected and it may be assumed that a particle passes the connection channel, when such a peak is present.

Due to the pressure difference, the suspension with the particles flows through the first chamber, through the connection channel and through the second chamber. This may be achieved by dispensing the first pipette tip into the first receptacle and by aspirating with the second pipette from the second receptacle. While passing through the connection channel, the particles induce a measurable drop or rise of the impedance, which may be called Coulter principle. The impedance signal may be evaluated by detecting peaks and a particle is detected, when such a peak is detected. For the measurements and the evaluation of the impedance signal, the electronics of the laboratory automation device may be used, such as electronics used for capacitance based liquid level detection.

When a particle has been detected inside the connection channel, the particle may be pushed into the second chamber by keeping the pressure difference between the chambers for a specific time. It also may be that the entering of the particle into the second chamber is detected by waiting until the impedance signal goes back to its average value. When the particle has entered the second chamber, a generation of the pressure difference between the first chamber and the second chamber is stopped.

According to an embodiment, when the particle has entered the second chamber, pressures are applied to the second chamber and optionally the first chamber, such that the detected particle enters an outlet channel connected to the second chamber and is dispensed through a pipette end of the particle separator. Upon detection of the particle, the flow from the first chamber to the second chamber is stopped and the particle in the second chamber can be ejected by a dispense into the second chamber. It may be that a volume of liquid is dispensed from the second pipette tip into the second chamber, which is equal of the volume of the second chamber. In such a way, the second chamber is completely flushed and it is sure that the particle has left the second chamber.

According to an embodiment, the particle separator is moved with the pipetting arm to a well into which the particle is to be dispensed. The particle may be dispensed trough the pipette end into the well. Since the particle separator is connected to the pipetting arm, it can be moved around like a pipette tip and a dispense through the outlet channel can be performed at any position. This is a big advantage for integrating the particle separation into an assay procedure performed by the laboratory automation device.

According to an embodiment, the method comprises: aspirating a suspension containing a liquid and particles into the first pipette tip. This may be achieved by generating an underpressure in the first pipette tip with the at least one pressure generator. Aspiration may be performed before the first pipette tip is connected to the particle separator.

According to an embodiment, the method comprises: dispensing the suspension from the first pipette tip into the first chamber, after the first pipette has been inserted into the first receptacle. This may be achieved by generating an overpressure in the first pipette tip with the at least one pressure generator. In this case, gas inside the first chamber is pushed by the suspension through the connection channel into the second chamber and from there through the outlet channel outside the particle separator.

According to an embodiment, the method comprises: aspirating a liquid (possibly without particles) into the second pipette tip. This may be achieved by generating an underpressure in the second pipette tip with the at least one pressure generator. Aspiration may be performed before the second pipette tip is connected to the particle separator. The liquid inside the second pipette tip may be the same liquid as in the suspension in the first pipette. For example, such a liquid may be an aqueous buffer (for example PBS buffer) for viability of cells or organoids.

According to an embodiment, the method comprises: dispensing the liquid from the second pipette tip into the second chamber, after the second pipette has been inserted into the second receptacle. This may be achieved by generating an overpressure in the second pipette tip with the at least one pressure generator. In this case, gas inside the first chamber is pushed by the liquid through the outlet channel out of the particle separator.

According to an embodiment, the pipette tips are made of an electrically conducting material, such as polypropylene filled with graphite. The electrically conducting pipette tips act as electrodes. The voltage and/or current applied from the measurement device to the particle separator is applied by the pipette tips to the liquid and/or suspension inside the particle separator. Also the measurements by the measurement device may be performed via the electrically conducting pipette tips. The conduction path comprises the first pipette tip, the suspension in the first chamber, the suspension in the connection channel, the liquid in the first chamber and the second pipette tip.

In such a way, particle detection and optionally particle counting may be achieved without additional electrode connections to the particle separator. The conduction path is solely formed by the pipette tips and the liquid and suspension inside the particle separator. This reduces the costs for the particle separator and makes further electrical interfaces obsolete, which may be error prone and difficult and expensive to manufacture.

According to an embodiment, an AC voltage signal is applied to the conduction path through the first chamber, the connection channel and the second chamber, wherein an amplitude and/or phase of the AC voltage signal is determined as impedance signal. When the impedance of the connection channel changes, this changes the amplitude and/or phase of the AC voltage signal.

According to an embodiment, a particle is detected, when the amplitude and/or phase deviates from an average value by a threshold. The average value of the amplitude and/or phase may be determined from the AC voltage signal, when no peaks and/or changes are present. For example, the threshold may be set to a 20% deviation from the average value. When the AC voltage signal has a peak caused by a particle passing the connection channel, the signal becomes higher or lower than the threshold and the particle is detected.

According to an embodiment, the amplitude and/or phase of the AC voltage signal is determined with a lock-in amplifier. A very efficient way of determining the amplitude and/or phase of an AC signal is with a lock-in amplifier, which compares the AC signal with a reference signal of the same frequency. Even signals with a very high signal-to-noise ratio can be evaluated.

According to an embodiment, a DC voltage is applied to a conduction path through the first chamber, the connection channel and the second chamber, wherein a time for charging a capacitor in the conduction path with the DC voltage is determined as impedance signal. When the resistance of the connection channel changes, the current through the connection channel changes and therefore the charging time of the capacitor. The charging may be performed to a threshold, i.e., a specific maximal charging voltage. After that, the capacitor may be discharged and the time for charging may be determined again. This may be done regularly and/or multiple times and a charging time signal over time may be generated. This charging time signal as impedance signal may be evaluated.

According to an embodiment, a particle is detected, when the charging time deviates from an average charging time. Peaks in the charging time signal may be detected, for example, by comparing the charging time signal with a threshold. When the charging time signal has a peak caused by a particle passing the connection channel, the signal becomes higher or lower than the threshold and the particle is detected.

A further aspect of the invention relates to a computer program for separating particles, which, when being executed by a processor, is adapted to carry out the steps of the method as described herein. For example, a laboratory automation device, which is performing the method automatically, is controlled by a computing device, such as a controller integrated into the laboratory automation device or a PC connected to the laboratory automation device. The computer program may be stored in the computing device and/or may be executed by a processor of the computing device.

A further aspect of the invention relates to a computer-readable medium, in which such a computer program is stored. A computer-readable medium may be a hard disk, an USB (Universal Serial Bus) storage device, a RAM (Random Access Memory), a ROM (Read Only Memory), an EPROM (Erasable Programmable Read Only Memory) or a FLASH memory. A computer-readable medium may also be a data communication network, e.g., the Internet, which allows downloading a program code. In general, the computer-readable medium may be a non-transitory or transitory medium.

A further aspect of the invention relates to a laboratory automation device comprising a pipetting arm, at least one pressure generator and a measurement device. Also one or more particle separators and/or one or more particle separator sets may be part of the laboratory automation device. The pipetting arm is adapted for grabbing a first pipette tip and a second pipette tip for plugging and/or inserting the pipette tips into the particle separator. The at least one pressure generator is adapted for generating a first pressure in the first pipette tip and a second pressure in the second pipette tip, wherein the second pressure is different from the first pressure. The measurement device is adapted for measuring a changing impedance of a suspension in the particle separator. The laboratory automation device may comprise a controller or more general computing device for automatically performing the method as described herein.

These and other aspects of the invention will be apparent from and elucidated with reference to the embodiments described hereinafter.

### BRIEF DESCRIPTION OF THE DRAWINGS

Below, embodiments of the present invention are described in more detail with reference to the attached drawings.
Fig. 1 schematically shows a laboratory automation device according to an embodiment of the invention.
Fig. 2 shows a perspective view of a particle separator according to an embodiment of the invention.
Fig. 3 shows a cross-sectional view of the particle separator of Fig. 2.
Fig. 4 shows a perspective view of cavities inside the particle separator of Fig. 2.
Fig. 5 shows a flow diagram of a method for separating particles according to an embodiment of the invention.
Fig. 6 shows a diagram with an impedance signal generated during the method of Fig. 5.

The reference symbols used in the drawings, and their meanings, are listed in summary form in the list of reference symbols. In principle, identical parts are provided with the same reference symbols in the figures.

### DETAILED DESCRIPTION OF EXEMPLARY EMBODIMENTS

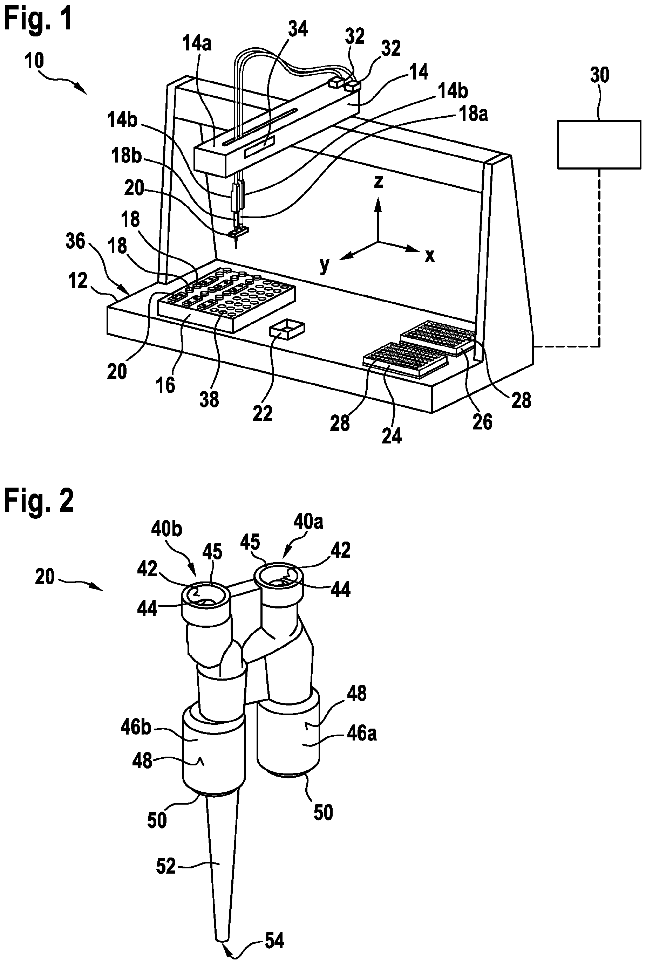

Fig. 1 shows a laboratory automation device 10 with a baseplate and/or worktable 12 and a pipetting arm 14. On the baseplate, a tray 16 for pipette tips 18 and particle separators 20, a liquid container 22, and microtiter plates 24, 26 with wells 28 are arranged.

The laboratory automation device 10 furthermore comprises a controller 30, which is adapted to control the laboratory automation device 10 and in particular the pipetting arm 14, pressure generators 32 and a measurement device 34.

By the control of the controller 30, the laboratory automation device 10 is adapted to automatically perform the following method. Two pipette tips 18a, 18b are picked up with the pipetting arm 14 from the tray 16. Here, the pipetting arm 14 is moved above the pipette tips 18 in the tray 16 and then lowered onto the respective pipette tips 18. In particular, the horizontal part 14a of the pipetting arm 14 moves to the x-y location of the pipette tips 18 and the pipetting channels 14b of the pipetting arm 14 move in z-direction to the z location to pick up the respective pipette tip 18.

With the first pipette tip 18a, a suspension with particles is aspirated from a first container, such as a well 28 from the first microtiter plate 24. To this end, the pipetting arm 14 moves the first pipette tip 18a into the respective well 28 and the pressure generators 32 generates a suitable underpressure in the first pipette tip 18a.

With the second pipette tip 18b, a liquid is aspirated from the liquid container 22. The pipetting arm 14 moves the second pipette tip 18b into the liquid container 22 and the pressure generators 32 generates a suitable underpressure in the second pipette tip 18b.

After that, a particle separator 20 is picked up with the pipetting arm 14 from the tray 16. The pipetting arm 14 moves the first pipette tip 18a and the second pipette tip 18b above the respective particle separator 20 in the tray 16 and then inserts the pipette tips 18a, 18b into the particle separator 20, which has corresponding receptacles.

As described above and below, with the generation of suitable pressures in the pipette tips 18a, 18b, the suspension and liquid are pumped through cavities in the particle separator 20 and by measurements with the measurement device 34, one particle is separated from the other particles in the suspension.

This particle is then dispensed together with liquid in a second container, such as a well 28 of the microtiter plate 26. The pipetting arm 14 moves the second particle separator 20 to the well 28 and by generating suitable pressures with the pressure generators 32, the particle is dispensed.

It is possible that further particles are separated with particle separator 20 and dispensed into further second containers, such as wells 28 of the microtiter plate 26. After that, the pipette tips 18a, 18b together with the particle separator 20 are disposed and the method may be started again.

A pipette tip tray 16 together with pipette tips 18 and the particle separators 20 may be seen as a particle separator set 36. The pipette tip tray 16 comprises tray receptacles 38, which are regularly arranged, here in a square pattern. Each pipette tip 18 is designed to fit in one tray receptacles 38. Each particle separator 20 may be designed to fit into two neighboring tray receptacles 38. Two pipette tips 18 and one particle separator 20, which may be used together such as described above, may be arranged in the pipette tip tray 16.

Fig. 2 shows the particle separator 20 in more detail. The particle separator 20 may be made from electrical insulating material. The particle separator 20 may be made from plastics material by injection moulding. For example, the particle separator may be made of two mirror symmetric halves, which are attached after moulding. Attaching may be performed by at least one of laser welding, plasma bonding, solvent bonding, ultrasonic bonding, chemical bonding, via adhesive, via adhesive foil, etc. As an alternative, the particle separator may be made from one injection molded part, which is sealed with an adhesive foil. The particle separator 20 may be designed as a consumable and/or disposable item.

At an upper end, the particle separator 20 has two receptacles 40a, 40b, which are designed to receive the two pipette tips 18a, 18b. The first receptacle 40a is for receiving the first pipette tip 18a, the second receptacle 40b is for receiving the second pipette tip 18b. In particular, the first receptacle 40a and the second receptacle 40b are designed for receiving a lower end and/or lower section of the pipette tip 18a, 18b, with the orifice for aspirating and dispensing. Each of the receptacles 40a, 40b is designed, such that the lower end of the pipette tip 18a, 18b fits into the receptacle 40a, 40b and stays there by friction fit, after being pressed into the receptacle 40a, 40b. The inner shape of each receptacle 40a, 40b may be equal to an outer shape of the lower section of the pipette tip 18a, 18b. As they are both designed for receiving the same type of pipette tip 18, the first receptacle 40a and the second receptacle 40b may have the same inner shape and optionally outer shape.

The receptacles 40a, 40b are both tapered, i.e., they have an opening decreasing in diameter in a direction, in which the respective pipette tip 18a, 18b is inserted into the respective receptacle 40a, 40b. An inner surface 42, 44 of the receptacle 40a, 40b becomes smaller towards a lower end of the particle separator 20. The receptacle 40a, 40b may have a conical inner shape and/or conical inner surface 42, 44. In particular, the receptacle 40a, 40b may have a guiding surface 42 and an adjoining sealing surface 44. The sealing surface 44 may be the inner surface of the receptacle 40a, 40b at which the pipette tip 18a, 18b sticks with friction fit. Both the guiding surface 42 and the sealing surface 44 may be tapered and/or may have decreasing diameter towards the lower end of the particle separator 20. The guiding surface 42 may have a larger opening angle as the sealing surface 44.

An upper rim 45 of the first receptacle 40a and an upper rim 45 of the second receptacle 40b are at the same horizontal level.

Between the upper end and the lower end, the particle separator 20 has two collars 46a, 46b. The collars 46a, 46b are adapted and/or designed to be seated in the pipette tip tray 16. The collars 46a, 46b make it possible to place the particle separator 20 in the same tray 16 as the pipette tips 18. In particular, each collar 46a, 46b is adapted and/or designed to be seated tray receptacle 38 of the pipette tip tray 16. The collars 46a, 46b may have the same distance as two neighbouring tray receptacles 38.

The collar 46a, 46b may be shaped like an upper section of one of the pipette tips 18. The collar 46a, 46b may have a cylindrical outer surface 48 and a lower rim 50 to be seated in the tray receptacle 38. The lower rims 40 may be at the same horizontal level.

At the lower end, the particle separator 20 has a pipette end 52, which may be formed like a conical tip. Inside the pipette end 52, there is an outlet channel 54, which is interconnected in fluid communication via interior chambers and/or cavities inside the particle separator 20 with the receptacles 40a, 40b.

Fig: 3 shows a cross-sectional view of particle separator 20 together with a particle separator set 36, which further comprises two pipette tips 18a, 18b and a pipette tip tray 16. The two pipette tips 18a, 18b have a lower end and or lower section fitting into the first receptacle 40a and the second receptacle 40b of the particle separator 20. The tray receptacles 38 of the pipette tip tray 16 are regularly arranged and each tray receptacle 38 has a seating 56 for a collar, which is designed for receiving one pipette tip 18. Also, the particle separator 20 has two collars 46a, 46b, which fit into the tray receptacles 38 and/or onto the seatings 56 of two neighboring tray receptacles 38. Each seating 56 may have a seating surface, which faces towards a lower rim 50 of the respective collar 46a, 46b. As an alternative, the tray has no seatings 56 and/or the particle separator 20 sits with the vertical rim between the collars 46a, 46b on an upper surface of the tray 16.

The particle separator 20 comprises a first chamber 58a below the first receptacle 40a and connected to the first receptacle 40a and a second chamber 58b below the second receptacle 40b and connected to the second receptacle 40b. The chambers 58a, 58b are cavities inside the particle separator 20. The chambers 58a, 58b may solely be fluidically connected via the receptacles 40a, 40b and the channel 54 with an exterior of the particle separator 20. The first chamber 58a is in fluid communication with the first receptacle 40a. The second chamber 58b is in fluid communication with the second receptacle 40b.

The particle separator 20 comprises a connection channel 60, which interconnects the chambers 58a, 58b with each other. Via the connection channel 60, the chambers 58a, 58b are in fluid communication. The outlet channel 54 is connected to the second chamber 58b. Via the outlet channel 54, the chamber 58 is in fluid communication with an exterior of the particle separator 20.

The collar 46a is provided below the first chamber 58a. The collar 46b, which surrounds the outlet channel 54, is provided below the second chamber 58b.

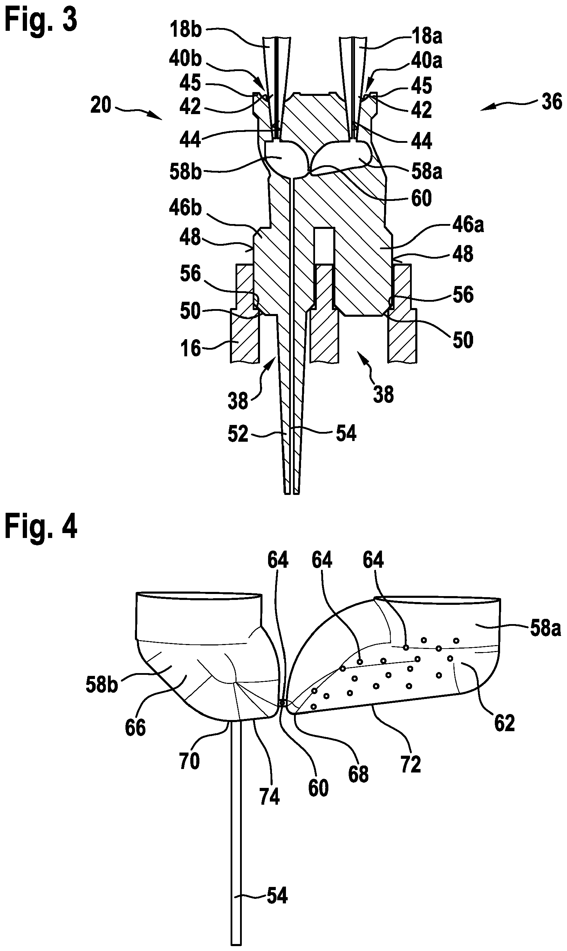

Fig. 4 shows a perspective view of inside cavities of the particle separator 20. During the method as described herein, the first chamber 58a may be filled with a suspension 62 of liquid and particles 64 via the pipette tip 18a, and the second chamber may be filled with a liquid 66 without particles 64. The particles 64 may be cells, organoids, beads or spheroids.

It can be seen that the connection channel 60 enters into the first chamber 58a above a bottom 68 and/or lowest point 68 of the first chamber 58a. Also, the connection channel 60 enters into the second chamber 58b above a bottom 70 and/or lowest point 70 of the second chamber 58b. There is a section of vertical wall below the connection channel 60 and the bottom wall 72, 74 of the respective chamber 58a, 58b. The vertical distance between the input of the connection channel 60 and the bottom 68, 70 and/or the respective bottom wall 72, 74 may be 1 time to 2 times the average of particle diameters of the particles 64 and/or 1 time to 2 times the diameters of the connection channel 60.

The bottom wall 72 of the first chamber 58a is angled with respect to a horizontal line, such that the bottom wall runs downwards towards the connection channel 60. The first chamber 58a may be lower at a side of the first chamber, where the connection channel 60 enters the first chamber 58a. Sinking particles 64 may leave an area with higher flowrate and may sink to the bottom wall 72 of the first chamber 58a. An angled bottom wall 72 has the advantage that gravity pulls particles 64 closer to the connection channel 60 and brings them back into the liquid stream.

The bottom wall 74 of the second chamber 58b runs downwards between the connection channel 60 and the outlet channel 54, which may be connected to the second chamber 58b at the bottom 70. This may help a particle 64 to run down to the outlet channel 54. The second chamber 58b may be lower at the outlet channel 54 compared to a side, where the connection channel 60 enters the second chamber 58b. The bottom 70 of the second chamber 58b may be lower than the bottom 68 of the first chamber 58a.

The connection channel 60 may be seen as a microchannel and/or Coulter channel. By applying different pressures to the pipette tips 18a, 18b, liquid 62, 66 may be pumped through the connection channel 60 from the first chamber 58a into the second chamber 58b. When a particle 64 enters the connection channel, this may be detected via the laboratory automation device 10. The detected particle 64 may be transported into the second chamber 58b and dispensed from there via the outlet channel 54 by applying suitable pressures to the pipette tips 18a, 18b.

The presence of a particle 64 in the connection channel 60 may be detected by measuring an impedance and/or resistance change of the liquid 62, 66 inside the channel, when a particle 64 enters the connection channel 60. The connection channel 60 may have a diameter close to the size of the particles 64 to increase this impedance and/or resistance change. For example, the connection channel 60 may have a diameter of less than 500 µm or less than 1 mm. For cells, the diameter may be as low as 10 µm. The length of the connection channel 60 may be at least one, two or three times its diameter, to reduce the chance that two particles 64 enter the connection channel 60 in one time. The length may be as close as possible to the diameter of the particles 64 to ensure optimal signal to noise ratios.

Fig. 4 shows a flow diagram for a method for separating particles 64 with the laboratory automation device 10. The method may be performed automatically by the laboratory automation device 10. The laboratory automation device 10 is controlled by the controller 30, which may be a PC connected to the laboratory automation device 10 or may be integrated into the laboratory automation device 10. The controller 30 may comprise microcontrollers that are adapted to communicate via a set of firmware commands that are sent via a connected PC and a graphical user interface.

In step S10, a first pipette tip 18a and a second pipette tip 18b are mounted to the pipetting arm 14 of the laboratory automation device 10. The first pipette tip 18a and the second pipette tip 18b may be taken from the pipette tip tray 16. Two pipette tips 18a, 18b are picked up with the pipetting arm 14 from the tray 16. Here, the pipetting arm 14 is moved above the pipette tips 18 in the tray 16 and then lowered onto the respective pipette tip 18, which then is mounted to the pipetting arm 14.

In step S12, a suspension 62 containing a liquid 66 and particles 64 is aspirated into the first pipette tip 18a. This may be achieved by generating an underpressure in the first pipette tip 18a with the corresponding pressure generator 32. The suspension 62 may be aspirated from a first container, such as a well 28 from the first microtiter plate 24. Before, the pipetting arm 14 may have moved the first pipette tip 18a into the respective well 28.

Furthermore, in step S12, a liquid 66 without particles is aspirated into the second pipette tip 18b. This may be achieved by generating an underpressure in the second pipette tip 18b with the corresponding pressure generator 32. The liquid 66 aspirated into the second pipette tip 18b may be the same liquid as contained in the suspension 62. The laboratory automation device 10 and in particular the at least one pressure generator 32 is adapted and designed to generate different pressures in the first pipette tip 18a and the second pipette tip 18b, at the same time independently from each other. The liquid 66 may be aspirated from the liquid container 22. Before, the pipetting arm 14 may have moved the second pipette tip 18b into the liquid container 22.

In step S14, a particle separator 20 is mounted to the pipetting arm 14 of the laboratory automation device 10. The particle separator 20 is mounted by inserting the first pipette tip 18a into the first receptacle 40a and the second pipette tip 18b into the second receptacle 40b of the particle separator 20. The particle separator 20 may be picked up with the pipetting arm 14 from the pipette tip tray 16. The pipetting arm 14 may move the first pipette tip 18a and the second pipette tip 18b above the respective particle separator 20 in the pipette tip tray 16 and then may insert the pipette tips 18a, 18b into the corresponding receptacles 40a, 40b. The pipetting arm 14 may be adapted for setting a distance between the pipette tips 18a, 18b to a distance between the receptacles 40a, 40b of the particle separator 20.

Both pipette tips 18a, 18b stay in the receptacles 40a, 40b by friction fit and the particle separator 20 may be moved around in the laboratory automation device 10 with the pipetting arm 14.

In step S16, the suspension 62 is dispensed from the first pipette tip 18a into the first chamber 58a. This may be achieved by generating an overpressure in the first pipette tip 18a with the pressure generators 32. Gas, such as air, inside the first chamber 58a is pushed by the suspension 62 through the connection channel 60 into the second chamber 58b and from there through the outlet channel 54 outside the particle separator 20. The amount of suspension 62 dispensed into the first chamber 58a may be set, such that the first chamber 58a is completely filled but no suspension 62 has entered the second chamber 58b.

Furthermore, in step S16, the liquid 66 is dispensed from the second pipette tip 18b into the second chamber 58b. This may be achieved by generating an overpressure in the second pipette tip 18b with the corresponding pressure generator 32. Gas, such as air and optionally surplus suspension, which has entered the second chamber 58b, is pushed by the liquid 66 into the outlet channel 54 and leaves the particle separator 20. The amount of liquid 66 dispensed into the second chamber 58b may be set, such that the first chamber 58a is completely filled with liquid 66 containing no particles 64.

In step S18, a pressure difference is generated between the first chamber 58a and the second chamber 58b of the particle separator 20, such that the suspension 62 inside the first chamber 58a is moved through the connection channel 60. Different pressures are applied to the first chamber 58a and the second chamber 58b via the first pipette tip 18a and the second pipette tip 18b via the corresponding pressure generator 32. The first pipette tip 18a dispenses suspension 62 into the first chamber 58a and the second pipette tip 18b aspirates liquid 66 synchronically. A flow of the suspension 62 is generated inside the connection channel 60.

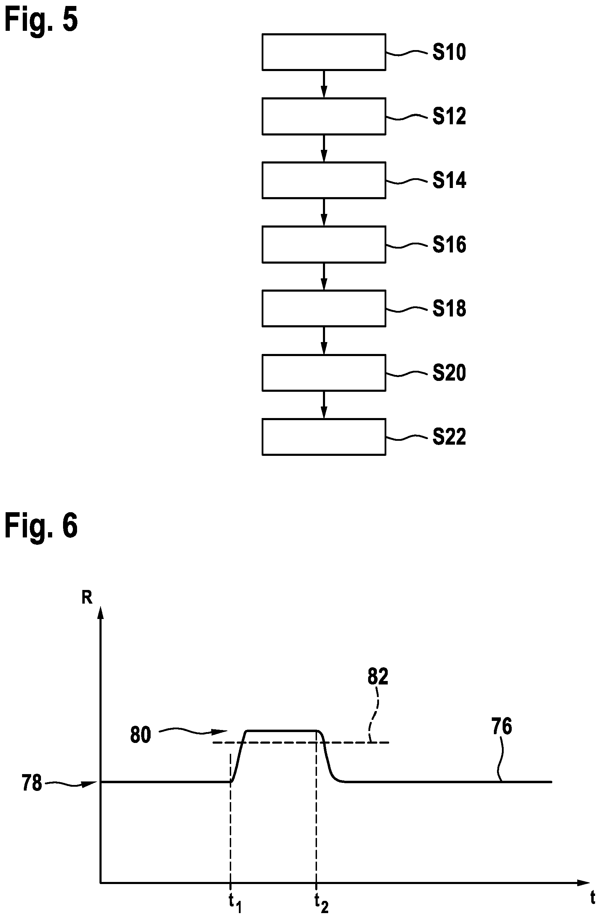

In step S20, an impedance signal is determined. Fig. 6 shows such an impedance signal 76. The impedance signal 76 is indicative of an impedance of the suspension 62 inside the connection channel 60 with a measurement device 34 of the laboratory automation device 10. In Fig. 6, a resistance R of the connection channel 60 over time t is depicted as impedance signal 76. However, the impedance signal 76 also may be a frequency, phase shift, etc.

Due to the flow of liquid through the connection channel 60, it may occur that one of the particles 64 enters the connection channel 60. This results in a different and/or changing impedance of the connection channel 60. Such a change is measured by the laboratory automation device 10 based on the principle of a Coulter counter.

In particular, the measurement device 34 applies a voltage to a conduction path through the particle separator 20. This conduction path may comprise the first chamber 58a, the connection channel 60 and the second chamber 58b. The pipette tips 18a, 18b may be made of an electrically conducting material, while the particle separator 20 may be made of an electrically insulating material. Thus, the electrically conducting pipette tips 18a, 18b may act as electrodes electrically interconnected by the liquid 66 inside the first chamber 58a, the connection channel 60 and the second chamber 58b.

The pipette tips 18a, 18b are connected to the pipette channels 14b, which are also electrically conducting. The pipette channels 14b are connected via electrical lines with the measurement device 34. Thus, in detail the conduction path is composed of: an electrical line from the measurement device 34 to the first pipette channel 14b, the first pipette tip 18a, the first chamber 58a, the connection channel 60, the second chamber 58b, the second pipette tip 18b, the second pipette channel 14b and an electrical line from the second pipette channel 14b to the measurement device 34.

Furthermore, in step S20, a particle 64 is detected passing the connection channel 60 by evaluating the impedance signal 76. When a particle 64 enters or leaves the connection channel 60, this results in a change of the impedance signal 76. It may be that the impedance signal lowers or rises when the particle 64 is inside the connection channel 60. As shown in the Fig. 6, a particle 64 enters the connection channel at time t₁ and leaves the connection channel at time t₂. The impedance signal 76 rises from an average value 78 to a higher value 80 at time t₁ and falls back to the average value 78 at time t₂. This results in a peak of the impedance signal 76 compared to an average impedance and/or average value 78. Such peaks may be detected and it may be assumed that a particle 64 passes the connection channel, when such a peak is present.

For example, a peak and/or a particle 64 in the connection channel may be detected by comparing the impedance signal 76 with a threshold 82, which for example may be set 20% higher and/or lower as the average value 78.

In the following, two examples are presented, which are based on applying an AC voltage signal or a DC voltage signal to the pipette tips 18a, 18b acting as electrodes.

In the first example, an AC voltage signal is applied to the conduction path via the pipette tips 18a, 18b. An amplitude and/or phase of the AC voltage signal is then determined as impedance signal 76. For example, the amplitude and/or phase of the AC voltage signal may be determined with a lock-in amplifier. When the impedance of the connection channel 60 changes, this changes the amplitude and/or phase of the AC voltage signal.

In the first example, a particle 64 is detected, when the amplitude and/or phase deviates from an average value 78 by a threshold 82. The average value 78 of the amplitude and/or phase may be determined from the AC voltage signal, when no peaks and/or changes are present. For example, the threshold 82 may be set to a 20% deviation from the average value 78. When the AC voltage signal has a peak caused by a particle 64 passing the connection channel 60, the signal becomes higher or lower than the threshold 82 and the particle is detected.

As a second example, a DC voltage is applied to the conduction path via the pipette tips 18a, 18b. As impedance signal 76, a time for charging a capacitor in the conduction path with the DC voltage is determined. The capacitor may be part of the measurement device 34. When the resistance of the connection channel 60 changes, the current through the connection channel 60 changes and therefore the charging time of the capacitor. The charging of the capacitor may be performed to a threshold, i.e., a specific maximal charging voltage. After that, the capacitor may be discharged and the time for charging may be determined again. This may be done regularly and a charging time signal over time may be generated as impedance signal 76 and may be evaluated like the impedance signal 76 of the first example.

In step S22, when a particle 64 has been detected inside the connection channel, the particle 64 may be pushed into the second chamber 58b by keeping the pressure difference between the chambers 58a, 58b for a specific time. It also may be that the entering of the particle 64 into the second chamber 58b is detected by waiting until the impedance signal 76 goes back to its average value 78. When the particle 64 has entered the second chamber 58b, the generation of the pressure difference between the first chamber 58a and the second chamber 58b is stopped.

When the particle 64 has entered the second chamber 58b, pressures are applied to the first chamber 58a and the second chamber 58b, such that the detected particle 64 enters the outlet channel 54 and leaves the particle dispenser 20 through the outlet channel 54. For this, the liquid 66 from the second pipette tip 18b may be dispensed, while no aspiration or dispense is performed with the first pipette tip 18a. It may be that a volume of liquid 66 is dispensed from the second pipette tip 18b into the second chamber 58b, which is equal to the volume of the second chamber 58b and the outlet channel 54. In such a way, the second chamber is completely flushed and it is sure that the particle 64 has left the second chamber 58b and the outlet channel 54.

It may be that the particle separator 20 is moved with the pipetting arm 14 to a second, further container, such as a well 28 of the microtiter plate 26, into which the particle 64 is to be dispensed. The flow generation though the channel 60 and the detection of a particle 64 may be performed, while the pipetting arm 14 is moving, for example from one location to another. Furthermore, the dispense end 52 may be moved into the container. Since the particle separator 20 is connected to the pipetting arm 14, it can be moved around like a pipette tip 18 and a dispense through the outlet channel 54 can be performed at any position. This particle 64 is then dispensed together with liquid 66 into the second container.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

### LIST OF REFERENCE SYMBOLS

- 10: laboratory automation device
- 12: worktable
- 14: pipetting arm
- 14a: horizontal part
- 14b: pipetting channel
- 16: pipette tip tray
- 18: pipette tip
- 18a: first pipette tip
- 18b: second pipette tip
- 20: particle separator
- 22: liquid container
- 24: microtiter plate
- 26: microtiter plate
- 28: well
- 30: controller
- 32: pressure generator
- 34: measurement device
- 36: particle separator set
- 38: tray receptacle
- 40a: first receptacle of particle separator
- 40b: second receptacle of particle separator
- 42: guiding surface
- 44: sealing surface
- 45: upper rim
- 46a: first collar
- 46b: second collar
- 48: outer surface
- 50: lower rim
- 52: pipette end
- 54: outlet channel
- 56: seating
- 58a: first chamber
- 58b: second chamber
- 60: connection channel
- 62: suspension
- 64: particle
- 66: liquid
- 68: bottom
- 70: bottom
- 72: bottom wall
- 74: bottom wall
- 76: impedance signal
- 78: average value
- 80: higher value
- 82: threshold

## Claims

1. A particle separator (20) for a laboratory automation device (10), comprising:
a first tapered receptacle (40a) and a second tapered receptacle (40b);
a first chamber (58a) below the first tapered receptacle (40a) and a second chamber (58b) below the second tapered receptacle (40b);
a connection channel (60) interconnecting the first chamber (58a) and the second chamber (58b);
an outlet channel (54) connected to the second chamber (58b).

2. The particle separator (20) of claim 1,
wherein the connection channel (60) enters into the first chamber (58a) above a bottom (68) of the first chamber (58a); and/or
wherein the connection channel (60) enters into the second chamber (58b) above a bottom (70) of the second chamber (58b).

3. The particle separator (20) of claim 1 or 2,
wherein a bottom wall (72) of the first chamber (58a) is angled, such that the bottom wall (72) of the first chamber (58a) runs downwards towards the connection channel (60).

4. The particle separator (20) of one of the previous claims,
wherein a bottom wall (74) of the second chamber (58b) runs downwards between the connection channel (60) and the outlet channel (54).

5. The particle separator (20) of one of the previous claims,
wherein the first tapered receptacle (40a) and the second tapered receptacle (40b) have the same inner shape.

6. The particle separator (20) of one of the previous claims,
wherein each of the first tapered receptacle (40a) and the second tapered receptacle (40b) have a guiding surface (42) and an adjoining sealing surface (44);
wherein the guiding surface (42) has a larger opening angle as the sealing surface (44).

7. The particle separator (20) of one of the previous claims,
wherein an upper rim (46) of the first tapered receptacle (40a) and an upper rim (46) of the second tapered receptacle (40b) are at the same horizontal level.

8. The particle separator (20) of one of the previous claims,
wherein the outlet channel (54) is provided in a pipette end (52) of the particle separator (20); and/or
wherein the outlet channel (54) is provided in a conical tip (52).

9. The particle separator (20) of one of the previous claims,
wherein a collar (46b) surrounding the outlet channel (54) is provided below the second chamber (58b).

10. The particle separator (20) of one of the previous claims,
wherein a further collar (46a) is provided below the first chamber (58a).

11. The particle separator (20) of claim 10,
wherein the collar (46b) and the further collar (46a) have the same outer shape and/or have a lower rim (50) at the same horizontal level.

12. The particle separator (20) of one of the previous claims,
wherein the particle separator (20) is made of an electrical insulating material; and/or
wherein the particle separator (20) is made from plastics material by injection moulding.

13. A particle separator set (36) for a laboratory automation device (10), comprising:
a particle separator (20) according to one of the previous claims;
two pipette tips (18) having ends fitting into the first tapered receptacle (40a) and the second tapered receptacle (40b).

14. The particle separator set (36) of claim 13, further comprising:
a plurality of particle separators (20) according to one of claims 1 to 12;
a plurality of pipette tips (18);
a pipette tip tray (16) for receiving the pipette tips (18) and/or the particle separators (20);
wherein the pipette tip tray (16) comprises tray receptacles (38), which are regularly arranged and each of which has a seating for a collar of one of the pipette tips (18);
wherein each particle separator (20) has at least two collars (46a, 46b) fitting into the seatings of at least two neighboring tray receptacles (38).

15. A laboratory automation device (10), comprising:
a particle separator (20) according to one of claims 1 to 12;
a pipetting arm (14) adapted for grabbing a first pipette tip (18a) and a second pipette tip (18b) and adapted for inserting the pipette tips (18a, 18b) into the particle separator (20);
at least one pressure generator (32) adapted for generating a first pressure in the first pipette tip (18a) and a second pressure in the second pipette tip (18b), wherein the second pressure is different from the first pressure;
a measurement device (34) adapted for measuring a changing impedance of a suspension in the particle separator (20).
